# EUROPÄISCHE PATENTSCHRIFT

(11) **EP 1 528 882 B1**
(45) Veröffentlichungstag und Bekanntmachung des Hinweises auf die Patenterteilung: **17.12.2008**
(21) Anmeldenummer: 03724775.6
(22) Anmeldetag: 03.06.2003
(51) Int. Cl.: A47J 37/06, H05B 6/12, H05B 6/06

(54) **BRATGERÄT**
ROASTING DEVICE
APPAREIL DE CUISSON

(30) Priorität: 16.08.2002 CH 141202
(43) Veröffentlichungstag der Anmeldung: 11.05.2005
(73) Patentinhaber: Inducs A.G., 9100 Herisau (CH)
(72) Erfinder: FUCHS, Christian, CH-8180 Bülach (CH)
(74) Vertreter: Frei Patent Attorneys
(86) Internationale Anmeldenummer: PCT/CH2003/000352
(87) Internationale Veröffentlichungsnummer: WO 2004/016139

(56) Entgegenhaltungen:
- EP-A- 0 645 114
- WO-A-97/37515
- DE-A- 19 540 408
- DE-U- 20 116 711
- US-B1- 6 320 169

## Beschreibung

Die Erfindung betrifft ein Bratgerät mit einer im Bratgerät eingebauten Bratplatte gemäss dem Oberbegriff des unabhängigen Patentanspruchs.

Aus dem Stand der Technik sind Vorrichtungen bekannt, die zum Braten oder Grillen von Speisen auf einer Bratplatte dienen. Solche Vorrichtungen weisen typischerweise eine von unten durch einen Rohrheizkörper oder gegebenenfalls induktiv beheizte Bratplatte aus Aluminium oder Stahl auf. Die Temperatur der Bratplatte wird zumeist durch einen, mit einer elektrischen Zuleitung kombinierten Einstellthermostaten geregelt, dessen Temperaturfühler am Rand der Bratplatte eingesteckt ist.

Bei diesen handelsüblichen, temperaturgeregelten Bratgeräten ist die Konstanz der eingestellten Temperatur jedoch durch mehrere Faktoren erheblich eingeschränkt. Zum einen weisen Thermostate eine Schalthysterese von mehreren °C auf. Zum anderen teilen sich Temperaturschwankungen der Bratplatte, z. B. durch Auflegen von Bratgut, nur mit zum Teil erheblicher zeitlicher Verzögerung durch Wärmeleitung dem Thermostaten mit. Des weiteren misst ein Thermostat üblicherweise nur am Rand und kann entsprechend teilweise recht unterschiedliche Temperaturen verschiedener Bereiche der Bratplatte nicht berücksichtigen. Als logische Konsequenz dazu werden bekannte Bratgeräte nur mit groben Temperaturstufen in °C oder Temperaturbereichen wie "schwache", "mittlere" und "starke" Hitze angeboten.

Nicht zuletzt weil in Bratgräten eine massive Hitze erzeugt werden muss, ist konventionellen Geräten typischerweise ein sehr hoher Temperaturzerfall auf der Bratfläche eigen. Dies ist natürlich nachteilig und wirkt sich äusserst negativ auf die Qualität der gebratenen Speisen aus. Beim Braten von Speisen werden auf eine heisse Bratplatte einzelne, noch kalte, teilweise sogar gefrorene Speisen aufgelegt. Dies führt zu einer räumlichen und zeitlichen Inhomogenität der Temperatur. Ein kontrolliertes Braten würde also eine Regelung verlangen, welche räumliche und zeitliche Konstanz gewährleistet. Eine möglichst genaue und konstant gehaltene Temperatur ist auch beim Grillen bzw. Braten von Bratgut von zentraler Bedeutung für die Qualität der gebratenen Speisen. Dass eine genaue Kontrolle über das Bratgut einem Bedürfnis entspricht, scheint ein unerkanntes Problem zu sein.

Es ist deshalb Aufgabe der Erfindung ein Bratgerät zu schaffen, welches Nachteile herkömmlicher Bratgeräte vermeidet. Insbesondere ist es Aufgabe der Erfindung ein Bratgerät zu schaffen mit dem ein optimales und kontrolliertes Braten von Speisen möglich ist.

Die Aufgabe wird durch das Bratgerät gelöst, wie es in den Patentansprüchen definiert ist.

Das erfindungsgemässe Bratgerät beinhaltet eine im Bratgerät eingebaute Bratplatte und mindestens eine ein Element eines Hochfrequenzschwingkreises bildende Messspule, wobei mit der mindestens einen Messspule die Temperatur der Bratplatte kontaktlos mittels elektromagnetischer Strahlung abfragbar ist und die Temperatur zur thermostatischen Regelung der Bratleistung verwendbar ist.

Das erfindungsgemässe Bratgerät beinhaltet eine genaue, im wesentlichen trägheitslose und vorzugsweise über grössere Bereiche einer Bratplatte integrierende thermostatische Regelung. Die kabellose Temperaturmessung nahe am Bratgut ist mit einer verzögerungsfreien, elektronischen Regelung der Bratleistung verbunden, so dass das Bratgut im wesentlichen in Echtzeit auf eine gewünschte Solltemperatur gebracht und möglichst genau gehalten wird. Es lässt sich eine mittlere Temperaturkonstanz von weniger als 1°C erreichen, deren Ist-Wert zudem noch digital angezeigt werden kann. Damit lassen sich unter anderem unerwünschte Temperaturzerfälle und Übertemperaturen auf der Bratfläche und eine damit zusammenhängende Qualitätseinbusse des Bratguts, verhindern. Zudem sind vorzugsweise sämtliche im Bratgerät verwendeten Materialien, deren Ausgestaltung und Verarbeitung aufeinander abgestimmt, derart dass eine gleichmässige Wärmeverteilung und eine optimale Energienutzung möglich ist.

Ein Bratgerät mit eingebauter Bratplatte ist in der DE 201167114 beschrieben.

Im europäischen Patent Nr. 0 858 722 wird ein Kochsystem beschrieben, das mittels kontaktloser thermostatischer Regelung unter Verwendung von elektro-magnetischer Strahlung die Temperatur eines Gefässbodens messen kann. Dieses System bezieht sich aber auf separates Kochgeschirr, z. B. Pfannen, Töpfe, das auf strahlungsdurchlässigen Kochflächen steht. Eine Temperaturbestimmung durch die Kochfläche hindurch kann somit nicht direkt, sondern nur indirekt mittels einer Fernabfrage mit elektromagnetischer Strahlung realisiert werden.

Im Gegensatz dazu gibt es beim erfindungsgemässen Bratgerät kein separates Kochgeschirr und keine separate Kochfläche. Für Bratplatten exisitieren zudem bereits direkt abfühlende thermostatische Regelungen, so dass kein Anlass zu bestehen schien, ein Bratgerät zu schaffen, welches mit bisher nicht erreichter Genauigkeit und Konstanz der Temperatur der Bratplatte arbeitet.

Gegenüber dem vorbekannten Kochsystem hat das erfindungsgemässe Bratgerät den weiteren Vorteil, dass die elektromagnetische Strahlung aussendende Messspule und die Bratplatte in einer gegebenen Geometrie zueinander stehen, da sie im Gerät eingebaut sind. Dadurch sind Messfehler ausgeschlossen, die beim Kochsystem aus dem Dokument Nr. 0 858 722 dadurch entstehen können, dass das Kochgeschirr ungenau plaziert wird, dass sich sein Boden beim Aufheizen durchwölbt oder dass für das Kochgeschirr ein ungeeignetes Material verwendet wird. Im erfindungsgemässen Bratgerät verwendete Materialien können zudem bereits bei der Herstellung aufeinander abgestimmt werden. Dies gilt insbesondere auch für die Abstimmung von Regel- und Steuereinheiten von Messvorrichtung und Bratleistung mit Materialparameter und Geometrie des Bratgeräts und seinen Elementen.

Bei der kontaktlosen Messung der Temperatur durch elektromagnetische Strahlung ist es vorteilhaft, wenn die Bratplatte mindestens teilweise, beispielsweise die Unterseite der Bratplatte, in an sich bekannterweise aus ferromagnetischem Material besteht. Die höchsten Temperatureffekte im Hochfrequenzschwingkreis der Messspule ergeben sich, wenn die Messpule möglichst nahe einer Bratplatte ist.

Entsprechend wird das Bratgerät vorzugsweise mit Induktionsmitteln, beispielsweise Induktionsspulen, ausgestattet und die Bratplatte induktiv beheizt. Es ist auch möglich, die Bratplatte mit konventionellen Heizelementen zu erhitzen. Die Induktionsmittel können derart ausgestaltet und auf die Geometrie der Bratplatte abgestimmt sein, dass ein im wesentlichen homogenes Induktionsfeld im gesamten Bereich der Bratplatte erzeugt und dadurch die gesamte Bratplatte gleichmässig erhitzt wird.

Die mindestens eine Messspule ist im vorgenannten Fall zwischen Bratplatte und Induktionsspule angeordnet, möglichst nahe an der Bratplatte. Die Messspule sollte den gesamten beheizbaren Bereich der Bratplatte umfassen, um so eine integrierende Temperaturmessung zu ermöglichen. Zum Schutz der Messspule bzw. einer gesamten Messvorrichtung ist diese vorzugsweise durch eine Isolation von der Bratplatte getrennt.

Ist eine Bratplatte als Mehrschichtenplatte gestaltet, so kann darin beispielsweise nur eine Schicht aus induktiv erhitzbarem Material hergestellt sein. In einem solchen Fall wird nicht die Temperatur der gesamten Bratplatte bestimmt, sondern es kann beispielsweise die Temperatur einer oberen, als Bratfläche dienenden, Schicht der Bratplatte abgefragt werden.

Die im erfindungsgemässen Bratgerät eingesetzten Materialien sind auf ihre Verwendung hin optimiert und aufeinander abgestimmt. Dadurch kann eine sehr schnelle Aufheizzeit der Bratplatte, eine schnelle und gleichmässige Wärmeverteilung, wo erwünscht eine Wärmespeicherung, sowie eine optimale Bratfläche erreicht bzw. geschaffen werden. Beispielsweise sind Materialien für die Bratplatte besonders wärmeleitfähig und leicht induktiv erhitzbar, z. B. Mehrschichtenplatten. Bratplatten besitzen vorzugsweise eine Oberflächenbeschaffenheit, welche das Anbrennen von Bratgut vermindern bzw. das Reinigen der Bratplatte erleichtern.

Zur Behandlung von Stahloberflächen sind mehrere Verfahren bekannt, welche zum Erreichen von gewünschten Eigenschaften der Oberfläche angewandt werden. Gewünschte Eigenschaften von Bratplatten sind typischerweise Härte, aber auch rostfreie Gestaltung oder spezielle Adhäsionseigenschaften der Oberfläche. In einer bevorzugten Ausführungsform der Erfindung wird dazu die Bratplatte bzw. ihre Oberfläche mit einem Verfahren mit an sich bekannten Verfahrensschritten zur Behandlung von Metall, insbesondere Stahloberflächen, behandelt. Dieses Verfahren, sowie auch die einzelnen Verfahrensschritte sind eine aufeinander abgestimmte Kombination von mechanischer, chemischer und elektrochemischer (galvanischer) Oberflächenbehandlung von Stählen, wie beispielsweise Stahl, Chromstahl oder Edelstahl. In einem ersten Verfahrensschritt wird eine Stahloberfläche mechanisch, chemisch und/oder elektroschemisch strukturiert. In einem zweiten Schritt wird die Oberfläche beschichtet bzw. mit Elementen und Materialien angereichert, und in einem dritten Verfahrensschritt wird die Oberfläche verdichtet. Die einzelnen Verfahrensschritte können durch bekannte Verfahrensschritte noch ergänzt werden. Eine Beschichtung bzw. Anreicherung mit Phosphor und Chrom und änschliessender Verdichtung, wirkt sich beispielsweise positiv auf die Härte des Stahls, seine Oberflächenstruktur und somit auf seine Korrosions- und Adhäsionseigenschaften aus. Das Behandlungsverfahren für Stähle oder andere geeignete Metalle wird im Folgenden HPCR-Inox genannt (Hoch-Phosphor-Chrom-Verfahren). Nach dem HPCR-Inox Verfahren behandelte Stahl-, insbesondere Edelstahloberflächen eignen sich überraschenderweise ganz besonders für Bratgerätoberflächen. Bratgerätoberflächen und Bratplatten allgemein müssen hitzebeständig sein, insbesondere in Bezug auf Verformung und Korrosion bei Temperaturen von ein paar 100°C. Eine HPCR-Inox behandelte Oberfläche zeichnet sich durch ihre Oberflächenstruktur und insbesondere, wie der Name bereits sagt, durch einen hohen Gehalt an Phosphor und Chrom aus. Durch Feinabstimmung des Verfahrens auf das zu behandelnde Material wird zudem eine verblüffende Temperatur-Abstrahlcharakteristik erreicht. Dies führt zu vorteilhaften sehr tiefen Abstrahltemperaturen, speziell in in Bratgeräten üblichen Temperaturbereichen, z. B. in Bereichen von 100-300°C.

Nebst der thermostatischen Regelung der Bratleistung und der möglichst gleichmässig Erhitzung der Bratplatte, wird vorzugsweise auch die Temperatur von im wesentlichen der gesamten Bratplatte erfasst. Dies kann durch eine optimierte Gestaltung und Anordnung der Induktionsmittel und der Messspule(n) erreicht werden.

Bei geeigneter Anordnung von Induktions- und Messspule wird ein Einfluss der Induktionsspule auf die Messspule, d.h. auf die Temperaturmessung, kompensiert. Dabei können zwei eine Messspuleneinheit bildende Messspulen nebeneinander gegensinnig im Induktionsfeld angeordnet werden. Jede der zwei Messspulen deckt dabei vorzugsweise im wesentlichen die Hälfte der Bratplatte ab. Bei einer runden Bratplatte sollte also die Messspuleneinheit aus zwei halbkreisförmigen Messspulen bestehen, bei einer rechteckigen Bratplatte aus zwei halb so grossen Rechtecken.

Je nach Material der Induktionsspule kann im erfindungsgemässen Bratgerät eine Kompensationsschaltung vorgesehen sein, welche den Störeinfluss der bei Temperaturänderungen auftretenden Änderungen des elektrischen Widerstands der Induktionsspule und der Messspule(n) auf das Messergebnis der Messpulen oder Messspuleneinheit ausgleicht.

Eine Induktionsspule kann auch selbst als Messspule dienen. In diesem Fall wird eine Temperaturmessung vorzugsweise bei kurzzeitig ausgeschalteter Induktionsleistung durchgeführt. Um die Häufigkeit der Schaltvorgänge möglichst gering zu halten, kann dabei die Temperaturmessung in umso grösseren Zeitabständen vorgenommen werden, je kleiner die Temperaturdifferenz zwischen zwei aufeinander folgenden Temperaturmessungen ist. Mit heutigen elektronischen Mitteln ist es kein Problem, solche Regelalgorithmen zu programmieren und automatisch ablaufen zu lassen.

Typischerweise wird im erfindungsgemässen Bratgerät die Temperaturabhängigkeit einer oder mehrerer physikalischer und gegebenenfalls auch chemischer Grössen des Materials der Bratplatte dazu benutzt, die Charakteristik eines Hochfrequenzschwingkreises, z.B. die Dämpfung, zu verändern, wobei diese Veränderung ein Mass für die Temperatur der Bratplatte ist. Der Messpegel einer bestimmten Temperatur hängt von der Charakteristik des Hochfrequenzschwingkreises, von der Geometrie zwischen Bratplatte und Messspule und von den Materialeigenschaften der Bratplatte ab. Hier können erhebliche Toleranzen auftreten. Deshalb ist eine Messspule vorzugsweise zentrisch bezüglich einer Mittelachse der Bratplatte oder bei mehreren erhitzbaren Bereichen, zentrisch bezüglich einer Mittelachse eines erhitzbaren Bereiches angeordnet. Des weiteren beinhaltet das erfindungsgemässe Bratgerät vorzugsweise eine Kalibriervorrichung, mit der die Messpegel verschiedener Temperaturen eines Bratgeräts, wie beispielsweise Zimmertemperatur oder Siedepunkt von Wasser, ermittelt und gespeichert werden können. Das erfindungsgemässe Bratgerät bietet den Vorteil, dass die Kalibrierung bei der Herstellung vorgenommen werden kann, so dass vom Anwender keine Nachkalibrierung nötig ist.

Das erfindungsgemässe Bratgerät bietet somit bisher nicht genannte energie- und insbesondere brattechnische Eigenschaften, dank der Kombination einer sensitiven, reaktionsschnellen, integrierenden und örtlich differenzierten Temperaturbestimmung und einer damit verbundenen Regelung der Energiezufuhr in die Heizelemente bzw. Induktionsmittel. Diese Merkmale können zusätzlich durch auf die Bratplatte hin optimierte Heizelemente bzw. Induktionsmittel und durch eine geeignete Materialwahl zumindest der Bratplatte ergänzt werden.

Das erfindungsgemässe Bratgerät ist vorzugsweise als Auftischgerät gestaltet. Dabei sind sämtliche zum Betreiben des Bratgeräts notwendigen Elemente in einem Gehäuse untergebracht. Das Bratgerät kann aber auch als Einbauvariante, z. B für Küchenbauer, gestaltet sein. Eine Einbauvariante ermöglicht beispielsweise das Einsetzen von Teilen des Bratgeräts in eine dafür vorgesehen Aussparung in einer Herdkombination und eine nachträgliche Anpassung bzw. Einpassung einer Bratplatte und allfälliger weiterer Elemente. Eine Einbauvariante weist entsprechende Befestigungsmittel und/oder Anschlüsse auf. Eine Energieversorgung ist dabei vorzugsweise als integriertes oder separates Modul gestaltet.

Je nach Grösse des Bratgeräts und um gleichzeitig verschiedene Gerichte mit unterschiedlichem Temperaturbedarf zubereiten zu können, kann die beispielsweise längliche Bratplatte mehrere individuell beheizbare Bereiche aufweisen, deren Temperaturen auch individuell messbar und einstellbar sind. Diese Bereiche sind dabei vorzugsweise durch geeignete Mittel vor gegenseitigen Temperaturüberträgen voneinander getrennt. Vorzugsweise ist genau eine Induktionsspule pro beheizbarer Bereich vorhanden und diese Induktionsspule wird von genau einer der Induktionsspule zugeordneten Regel- und Steuereinheit gesteuert und überwacht.

Im Folgenden wird die Erfindung anhand beispielhafter, schematisch dargestellter Figuren erläutert.

Es zeigen:
Fig. 1 einen Querschnitt durch einen Aufbau eines Heiz- und Messbereichs eines erfindungsgemässen Bratgeräts,
Fig. 2 ein erfindungsgemässes Bratgerät als Einzel-Auftischgerät,
Fig. 3 ein erfindungsgemässes Bratgerät als Doppel-Auftischgerät,
Fig. 4 eine Ausführungsform des erfindungsgemässen Bratgeräts als Einbauvariante,
Fig. 5 eine weitere Ausführungsform des erfindungsgemässen Bratgeräts,
Fig. 6 eine Ausführungsform einer Induktionsspule,

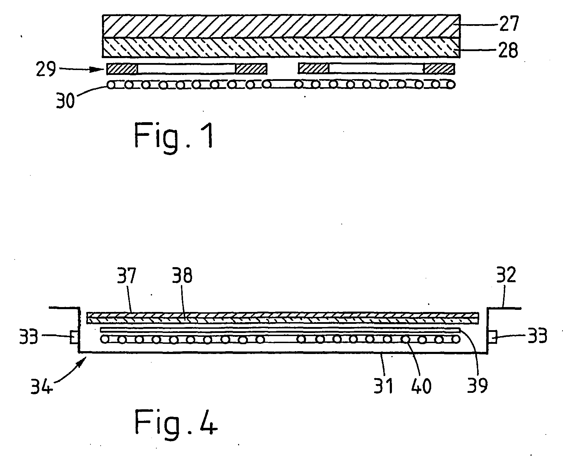

In **Figur 1** ist ein bevorzugter Aufbau des Mess- und Heizbereichs des erfindungsgemässen Bratgeräts gezeigt. Unter einer induktiv erhitzbaren Bratplatte 27 befindet sich eine Isolationsschicht 28, eine aus zwei Messspulen bestehende Messspuleneinheit 29 und eine Induktionsspule 30. Die Bratplatte 27 ist typischerweise eine, ferromagnetisches Material enthaltende Platte, z. B. eine Platte aus behandeltem Edelstahl, Chromstahl oder verchromt oder eine Mehrschichtenplatte mit mindestens einer ferromagnetischen oder induktiv erhitzbaren Schicht. Die Oberfläche der Bratplatte 27 ist vorzugsweise dergestalt, dass Bratgut möglichst wenig darauf anhaftet und/oder die Bratplatte einfach zu reinigen, insbesondere auch kratzfest ist. Die Plattenoberfläche weist zudem eine möglichst tiefe Abstrahlungstemperatur auf, so dass ein angenehmes Arbeitsklima geschaffen wird. Werte für eine Abstrahltemperatur liegen bei weniger als 70°C, typischerweise bei 40-60°C, z.B. 45°C, in 2 cm über der Platte bei einer Plattentemperatur von 200°C. Die Abtrahltemperatur ist hier diejenige (Luft-)Temperatur, die beispielsweise mittels konventionellem Thermometer bei Umgebungsbedingungen, z.B. 25°C und ca. 60% Luftfeuchtigkeit, über der Oberfläche gemessen wird. Im Vergleich zu den angegebenen tiefen Abstrahltemperaturen liegt dazu bei vergleichbaren Plattentemperatur- und Abstandswerten von bekannten Elektrobratgeräten die Abstrahltemperatur bei ca. 90° C oder höher. Mit niedrigen Abstrahltemperaturen entstehen keine ermüdenden Hitzewellen am Arbeitsplatz und es ist keine aufwändige Lüftungstechnik notwendig, was wiederum zur erhöhten Wirtschaftlichkeit des Geräts führt. Die aufgezählten Eigenschaften der Bratplattenoberfläche können durch eine spezielle Behandlung der Plattenoberfläche, z. B. durch Mikropolieren oder durch eine geeignete Beschichtung der Platte, z. B. Antihaftbeschichtung, erreicht werden. Besonders bewährt hat sich die Behandlung der Bratplattenoberfläche, beziehungsweise einer als Bratfläche dienenden obersten Schicht einer Mehrschichtenplatte, nach einem hier HPCR-Inox genannten Verfahren. Das HPCR-Inox Verfahren ist eine fein abgestimmte Kombination von an sich bekannten mechanischen, chemischen und elektrolytischen Behandlungen der Stahloberfläche. Dieses Verfahren ergibt mehrere, mindestens zwei aufeinanderfolgende dünne Schichten, in der Fachsprache auch Sandwich-Schicht genannt, an der Oberfläche des Edelstahls. Dünne Schichten sind allgemein Schichten in einem Bereich von typischerweise wenigen Nanometern bis einige hundert Mikrometer, z. B. 20nm-400µm oder 50nm-250µm. Die zwei oder mehr dünne Schichten weisen insgesamt im Gegensatz zu unbehandeltem Edelstahl einen hohen Chrom- und hohen Phosphoranteil auf. Die Feinabstimmung des HPCR-Inox-Verfahren zur Behandlung von Edelstahl für Bratplatten ergibt einen Phosphoranteil von ca. 10-16%, typischerweise von 12-15%, z.B. 14% oder 15%, in der Sandwich-Schicht. Die als letzte im Beschichtungsverfahren aufgetragenen Schicht ist eine reine Chromschicht. Durch Erwärmung der Bratplatte diffundiert ein Teil des Chroms in den Stahl oder in die unteren Schichten bzw. Nickel aus unteren Schichten vermischt sich mit dem Chrom, so dass die Sandwich-Schicht einen Chromanteil in einem Bereich von 10-40%, typischerweise in einem Bereich von 15-30%, z.B. 20% aufweist. Eine Deckschicht, d.h. die oberste und im wesentlichen diejenige als Bratfläche dienende dünne Schicht weist somit einen beispielhaften Chromgehalt von ca. 20%=100%, z.B. 30%-80% auf.

Das HPCR-Inox Verfahren beinhaltet in wesentlichen drei Verfahrensschritte, welche als a) Strukturierung, b) Beschichtung und c) Verdichtung der Stahloberfläche bezeichnet werden können. Die einzelnen Verfahrensschritte werden mit an sich bekannten Methoden ausgeführt. Die Strukturierung geschieht beispielsweise durch eine Kombination von mechanischen, chemischen und elektrochemischen Massnahmen, wie schleifen, bürsten, strahlen (Sand oder Kugelstrahlen), galvanische Bäder etc.. Dabei wird eine anfänglich aufgerauhte, grob strukturierte Oberfläche verfeinert. Anschliessen wird die zuvor strukturierte Oberfläche mit einem hochphosphor haltigen Nickel behandelt und mit einem Chromabschluss, der Deckschicht, versehen. In einer einfachen Variante des Verfahrens umfasst dieser zweite Verfahrensschritt, die Beschichtung b), lediglich zwei Unterschritte: eine Anreicherung mit Phosphor und eine Anreicherung mit Chrom. Dies führt im wesentlichen zu einer hoch-phosphorhaltigen und Nickel beinhaltenden Schicht auf der Stahloberfläche, auf welche phosphorhaltige Schicht eine Chrom-Deckschicht aufgebracht wird. In einem letzten Verfahrensschritt wird die Oberfläche verdichtet, was wiederum typischerweise mechanisch gemacht wird. Je nachdem welche Eigenschaft die zu behandelnde Oberfläche haben soll, können die einzelnen Verfahrensschritte auch wiederholt, mit bekannten Verfahrensschritten ersetzt oder ergänzt oder entsprechend angepasst werden.

Die Isolationsschicht 28 der Mehrschichtenplatte, z. B eine hochisolierende Keramikfaserschicht, isoliert die Messspulen und die Induktionsspule und allfällige in der Nähe befindlichen Regel- und Steuereinheiten vor der heissen Bratplatte 27. Die Isolationsschicht kann auch noch weitere Eigenschaften, z. B. eine Feuchteisolation, aufweisen. Die Induktionsspule 30 ist beispielsweise eine Kupferspule. Sie wird bevorzugt flächig als Spirale in einer Rechteckform ausgebildet, so dass im wesentlichen die gesamte Fläche der rechteckigen Bratplatte 27 gleichmässig erhitzt und als Bratfläche verwendet werden kann (Bei einer runden Bratplatte ist die Induktionsspule entsprechend flächig und rund gestaltet). Insbesondere kann damit Bratgut unabhängig von seiner Position auf der Bratfläche gleichmässig gebraten werden. Zwei gleichartige Messspulen der Messvorrichtung liegen nebeneinander und umfassen je etwa die Hälfte der von der Induktionsspule abgedeckten Fläche. Die Messspulen sind vorzugsweise gegensinnig so miteinander verschaltet, dass sich die in ihnen von der Induktionsspule induzierten Spannungen gegenseitig aufheben.

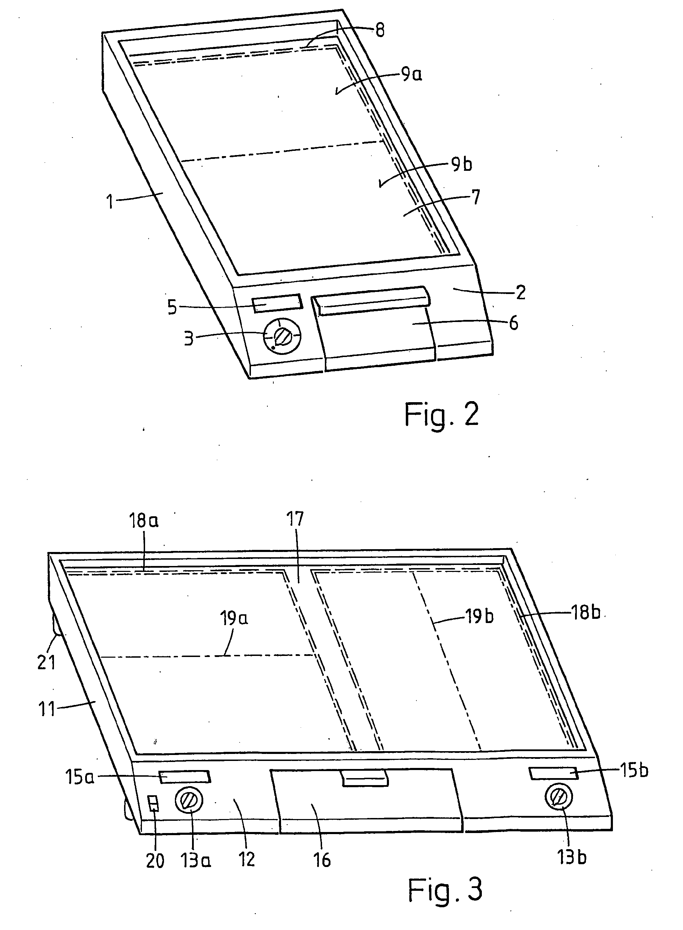

In **Figur 2** ist ein erfindungsgemässes Bratgerät als Einzel-Auftischgerät gezeigt. Die Bratplatte 7 weist eine gestrichelt eingezeichnete, von der unter der Bratfläche befindlichen Induktionsspule abgedeckten, Bratfläche 8 auf. Strich-punktiert eingezeichnet sind die Messflächen 9a, 9b, die von der ebenfalls unter der Bratplatte 7 angeordneten Messspuleneinheit abgedeckt werden. Die Induktionsspule weist eine im wesentlichen rechteckige Form auf, so dass sie in etwa die gesamte Bratplatte 7 mit einem Induktionsfeld abzudecken vermag, derart dass eine maximale Bratfläche entsteht. Die Windungen der Induktionsspule sind dabei wiederum so angeordnet, dass auf der gesamten Fläche der Bratplatte ein homogenes Induktionsfeld erzeugt wird. Die Messflächen 9a, 9b sind decken im wesentlichen die gleich Fläche wie die Insuktionsspule ab und sind vorzugsweise separat abfragbar. Dies erlaubt eine flächendeckende Temperaturmessung der Bratplatte. Um Störsignale der Induktionsspule bei einer Temperaturmessung zu vermeiden, kann eine Energiezufuhr in die Induktionsspule kurzzeitig unterbrochen werden, um die Temperaturmessung unabhängig durchführen zu können.

Das Gehäuse 1 weist auf seiner Frontseite 2 ein Schaltmittel, z. B. einen Drehschalter 3, zum Wählen von verschiedenen Solltemperaturen im Bereich von Zimmertemperatur bis 250°C oder 300°C, z. B. in 10°-20°C oder vorzugsweise kleineren, z.B. 2°C Schritten, auf. Die Solltemperaturen sind die Temperaturen, die auf der Bratfläche 8 erreicht, d.h. bei der Bratgut gebraten werden soll. Der Drehschalter 3 ist entsprechend mit einer Regel- und Steuereinheit, z. B. einem Computerchip oder Mikroprozessor, verbunden, welche mit der Messspuleneinheit und einer sich ebenfalls im Auftischgerät befindlichen (nicht dargestellten) Energieversorgung, z.B einem Generator, für die Induktionsmittel verbunden ist. Messspuleneinheit bzw. die Messvorrichtung und Regel- und Steuereinheit können auch als eine Einheit ausgebildet sein. Die Frontseite 2 weist weiter Anzeigemittel 5 zum Anzeigen der aktuellen Brattemperatur auf. Vorzugsweise ist dies eine Digitalanzeige, welche die Brattemperaturen besonders genau anzuzeigen vermag und diese beispielsweise auf 5°C genau anzeigt. Die Anzeigemittel 5 können auch so gestaltet sein, dass sie noch weitere Angaben anzeigen, z. B. die Solltemperatur oder die aktuelle Heizleistung. Des weiteren ist in der Frontseite 2 eine Auffangwanne 6 eingebracht, in die Saft und sonstige Bratrückstände von der Bratfläche 4 entfernt und entsorgt werden können. Die Auffangwanne 6 kann so ausgebildet sein, dass sie sich im wesentlichen über die gesamte Höhe und Breite des Geräts erstreckt, oder aber auch nur über einen Teil der Breite oder Höhe.

Dazu weist die Bratplatte 5 eine Öffnung (in der Figur nicht dargestellt), z. B. einen Kreis, einen Halbkreis oder einen Schlitz, auf, durch die der Saft abfliessen bzw. Bratrückstände geschoben werden können und dann in der Auffangwanne 6 gesammelt werden. Im Bratgerät kann auch einfach eine Öffnung zwischen Bratplatte und Rand des Bratgeräts vorhanden sein. Zur Verhinderung von Materialverspannungen in der Bratplatte bzw. im Übergang Bratplatte und Einfassung der Bratplatte auch bei langandauernder Hitze, ist die Bratplatte vorzugsweise in einer Tiefzug-Konstuktion gestaltet. Das Bratgerät kann zusätzlich mit einem, vorzugsweise aufsteckbaren, Spritzschutz versehen werden.

Die Energiezufuhr in die Induktionsspule ist vorzugsweise derart geregelt, dass sie einsetzt, sobald die eingestellte Solltemperatur über der gemessenen Isttemperatur liegt, und dass sie ausschaltet sobald die Isttemperatur über der Solltemperatur liegt, so dass eine verzögerungsfreie, elektronische Regelung der Temperatur in Echtzeit entsteht. Dabei kann jeweils die volle Leistung geschaltet werden. Es ist aber auch möglich eine dosierte Energiezufuhr zu bewirken. Beispielsweise kann das Bratgerät bei Erreichen der Solltemperatur in einen sogenannten Stand-by Modus übergehen. Dabei wird den Induktionsmitteln beispielsweise nur zeitweise oder eine geringere Leistung zugeführt. Im erfindungsgemässen Bratgerät können bereits kleinste Temperaturschwankungen von unter 1°C, z. B. 0.5°C, festgestellt werden. Die Reaktionszeiten auf solche Temperaturschwankungen werden typischerweise äusserst kurz, z. B. im Microsekundenbereich, gehalten. Dadurch bleibt der Energieverbrauch des Bratgeräts minimal, da insbesondere keine grossen Temperaturverluste entstehen, die kompensiert werden müssen. Damit kann Bratgut bei maximal 2% Abweichung von der gewünschten Temperatur zubereitet werden. Durch eine optimierte Abstimmung im Bratgerät, insbesondere in der Bratplatte, verwendeter Materialien, der Temperaturregelung und der Energiezufuhr, kann eine extrem schnelle Aufheizzeit der Bratplatte erreicht werden. Diese liegen in einem beispielhaften Bereich von 20-200°C in ca. 4-5 Minuten.

Die Häufigkeit einer Temperaturmessung kann im wesentlichen frei gewählt werden. Eine Temperaturmessung wird beispielsweise mehrere Male pro Minute durchgeführt. Es ist gegebenenfalls auch möglich, bei genügender Abschirmung der Messvorrichtung und allfälliger zusätzlicher Korrekturen der Messresultate, eine Messung der Temperatur der Bratplatte 7 und deren Erhitzung gleichzeitig durchzuführen.

Das Bratgerät weist vorzugsweise eine Lüftung, z. B. ein Ventilator, auf, wobei das Gehäuse 1 beispielsweise mit Lüftungsschlitzen versehen ist.

Die Grösse einer Rechteck-Induktionsspule liegt für ein Einzel-Auftischgerät vorzugsweise in einem Bereich von 850-2000cm², typischerweise im einem Bereich von 1000-1500cm², z. B. 1300cm². Dies entspricht in etwa einer Rechteckspule mit den bevorzugten Massen von 290x430mm. Dieser Rechteckspule sind vorzugsweise je zwei Messspulen von z. B. 145x430mm zugeordnet, so dass sie gemeinsam dieselbe Fläche ergeben wie die der Induktionsspule.

Je nach Material von Messvorrichtung und Induktionsspule und u. U. auch einer Regel- und Steuereinheit kann die Isolationsschicht auch ein Luftspalt sein.

**Figur 3** zeigt eine bevorzugte Ausführungsform des Bratgeräts als Doppel-Induktions-Auftischgerät. Das Doppelgerät weist eine durchgehende Bratplatte 17 mit zwei nebeneinanderliegenden, je etwa quadratischen, gestrichelt eingezeichneten Bereichen 18a, 18b auf, welche individuell beheizbar und deren Temperaturen individuell messbar und einstellbar sind. Die strich-punktierten Linien bezeichnen die Messspuleneinheiten 19a, 19b, bestehend aus je zwei rechteckigen Messspulen, wobei die Messspuleneinheit je einer Induktionsspule zugeordnet ist.

Das Bratgerät, insbesondere die Bratplatte ist so ausgestaltet, dass ein Temperaturübertrag vom einen Bereich 18a in den benachbarten Bereich 18b verhindert oder zumindest stark unterdrückt wird. Dies geschieht vorzugsweise durch Einbringen eines Keils in eine bzw. im Inneren einer Bratplatte. Ein solcher Keil kann über eine gesamte Länge oder Breite einer Bratplatte verlaufen und ist bei einer Mehrschichtenplatte typischerweise in einer inneren Schicht eingebracht. Ein beispielhafter Aufbau einer Mehrschichtenplatte ist eine Aluminiumschicht, welche zwischen zwei Edelstahlschichten eingebracht ist. Die Dicken der Edelstahlschichten liegen in einem Bereich von 0.4-1.5mm, z.B. 0.7mm, die der Aluminiumschicht in einem Bereich von 4-15mm, z.B. 7mm. Die Aluminiumschicht übernimmt im Wesentlichen die Wärmespeicherung und verteilung, während in den, oder zumindest einer der, Edelstahlschichten induktiv Wärme erzeugt wird. Um allfällige nicht-magnetische Materialien, wie beispielsweise Edelstahl, magnetisch zu machen, wird dieses vor der Verwendung in einer Bratplatte entsprechend behandelt, beispielsweise gepresst. Die Schicht, welche als Bratfläche dient wird zudem noch oberflächenbehandelt, so dass sie möglichst beständig gegen Wärme, Korrosion und Zerkratzen ist. Bei Behandlung der Oberfläche nach dem HPCR-Inox-Verfahren ist es zudem möglich diese fett- und flüssigkeitsabweisend, sowie reflexionsarm zu gestalten.

Am Gehäuse 11 befinden sich erste und zweite Schaltmittel 13a, 13b, erste und zweite Anzeigemittel 15a, 15b, zum Einstellen bzw. zum Anzeigen der Brattemperaturen, sowie ein weiteres Schalt- bzw. Anzeigemittel 20, z. B. zum Einschalten des Geräts bzw. zum Anzeigen ob das Gerät an einer externen Energiequelle angeschlossen ist. Die ersten und zweiten Schaltmittel 13a, 13b sind mit zwei sich im Gehäuse befindlichen Regel- und Steuereinheiten verbunden, welche wiederum mit zwei, sich ebenfalls im Gehäuse befindlichen Energieversorgungen für zwei im wesentlichen quadratischen Induktionsspulen verbunden sind. Die zwei Regel- und Steuereinheiten regeln die Energieversorgung der zwei Induktionsspulen unter Berücksichtigung der Einstellungen der Schaltmittel 13a,13b und den Messergebnissen der Messspulen bzw. Messeinheiten. Jeder Induktionsspule sind zwei eine Messeinheit bildende Messspulen zugeordnet, wobei eine Messeinheit im wesentlichen dieselbe Fläche 18a bzw. 18b der Bratplatte 17 abdeckt, wie eine Induktionsspule.

In der Frontseite 12 ist eine möglichst einfach zugängliche Auffangwanne 16 eingebracht. An der Unterseite des Geräts befinden sich höhenverstellbare und arretierbare Füsse 21, mit denen das Bratgerät vorzugsweise rutschfest auf einer Oberfläche positioniert werden kann.

In **Figur 4** ist eine Ausführungsform eines Bratgeräts als Einbauvariante gezeigt. Sie beinhaltet in wesentlichen ein Gehäuse 31 mit Induktionsmittel 40 und Messvorrichtung 39, sowie die dazugehörige Regel- und Steuereinheiten bzw. Anschlüsse dazu (in der Figur nicht dargestellt). Die Einbauvariante ist so ausgestaltet, dass sie in eine Küchenkombination eingebaut und dort, falls nicht vorgängig bereits geschehen, mit einer Bratplatte 37 und einer Isolationsschicht 38 kombiniert und an eine Energieversorgung, z. B. einen Generator, angeschlossen werden kann. Das Gehäuse 31 weist dazu Haltemittel 32, z.B. Vorsprünge, Durchführungen für Schrauben etc., sowie Anschlüsse 33 für eine Energieversorgung auf. Die Energieversorgung ist beispielsweise ein externes Generatormodul, das in derselben Küchenkombination untergebracht werden kann. Ferner beinhaltet das Gehäuse weitere Anschlüsse 34 für allfällige Schalt- und Anzeigemittel.

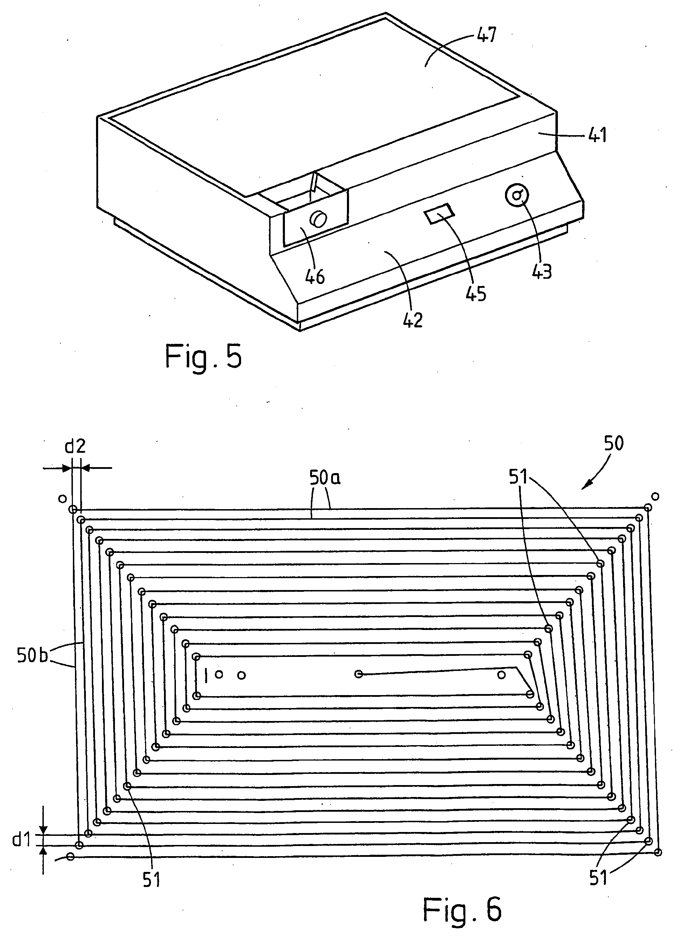

**Figur 5** zeigt ein erfindungsgemässes Einzel-Bratgerät mit einer Bratplatte 47 und Auffangwanne 46, welche zusammen mit dem Oberteil des Gehäuses 41 im wesentlichen in einer Ebene angebracht bzw. untereinander bündig angeordnet sind. Somit sind keine Öffnungen in oder Spalten neben der Bratplatte 47 erforderlich, um Abfälle beseitigen zu können. Die Frontseite 42 weist Anzeigemittel 45 und Schaltmittel 43 zum Anzeigen bzw. Einstellen der gewünschten Brat- und Isttemperatur auf. Das Bratgerät besticht durch einen äusserst schlichten, einfachen und kompakten Aufbau. Es ermöglicht auch eine sehr einfache Reinigung, da keine schwer zugänglichen Gehäuseecken und -kanten vorhanden sind. Schaltmittel können zudem als sogenannte "Touch Screen" gestaltet und beispielsweise in die Anzeigemittel 45 integriert werden. Ein Doppel-Bratgerät gemäss dieser Ausführungsform unterscheidet sich typischerweise in der Tiefe oder Breite des Geräts, wobei dieselben Anzeige- bzw. Schaltmittel - entsprechend angepasst- verwendet werden können.

In **Figur 6** ist eine Induktionsspule 50 gezeigt, welche in stromdurchflossenem Zustand ein homogenes Magnetfeld und im wesentlichen auf der gesamten Ausdehnung einer der Induktionsspule (bis auf isolierende, nicht-magnetische Schichten) benachbart angeordneten rechteckigen Bratfläche ein homogenes Induktionsfeld erzeugt. Die Homogenität des Magnetfelds wird durch die spezielle Wicklung der Induktionsspule, z.B. des Kupferdrahts oder -litze, erreicht. Dabei stehen die Abstände d1 zwischen zwei Wicklungsabschnitten auf der Längsseite 50a der Spule und die Abstände d2 zwischen zwei Wicklungsabschnitten auf der Breitseite 50b der Spule in bestimmtem Verhältnis zueinander. Diese Abstände d1, d2 sind variabel und sind insbesondere verschieden bei äusseren und inneren Windungen der Spule, d.h. d1 und d2 variieren als Funktion des Wicklungsdurchmessers. Bei bis auf wenige innerste Wicklungspunkte in nach innen zunehmendem Abstand auf den Diagonalen der Spule angeordneten Wicklungspunkten 51, ergibt sich für ein homogenes Spulen-Magnetfeld ein Verhältnis d1/d2, welches direkt aus Magnetfeldberechnungen für Spulen mit Angaben von Länge, Breite und Anzahl Wicklungen einer Spule berechnet werden kann. Beispielhafte Werte sind eine Spulengrösse von 395mmx225mm mit 28 Wicklungen.

## Patentansprüche

1. Thermostatisch geregeltes Bratgerät mit einer im Bratgerät eingebauten Bratplatte (7,17;27,37), **dadurch gekennzeichnet, dass** es mindestens eine ein Element eines Hochfrequenzschwingkreises bildende Messspule beinhaltet und dass mit der mindestens einen Messspule die Temperatur der Bratplatte (7,17,27,37) kontaktlos mittels elektromagnetischer Strahlung abfragbar ist und die Temperatur zur thermostatischen Regelung der Bratleistung verwendbar ist.

2. Bratgerät nach Anspruch 1 **dadurch gekennzeichnet, dass** die Bratplatte (7,17,27,37) ferromagnetisches Material beinhaltet und dass mindestens eine Induktionsspule (30,50) zum Erhitzen der Bratplatte vorhanden ist.

3. Bratgerät nach Anspruch 2, **dadurch gekennzeichnet, dass** die Induktionsspule (30,50) in Rechteckform ausgebildet ist und die Grösse dieser Induktionsspule (30,50) im wesentlichen der Ausdehnung der Bratplatte (7,17,27,37) entspricht.

4. Bratgerät nach Anspruch 3, **dadurch gekennzeichnet, dass** Abstände d1 zwischen zwei Wicklungsabschnitten auf Längsseiten (50a) der Rechteckspule und Abständen d2 zwischen zwei Wicklungsabschnitten auf Breitseiten (50b) der Rechteckspule unterschiedlich sind und in Funktion des Wicklungsdurchmessers variieren.

5. Bratgerät nach einem der Ansprüche 2 bis 4, **dadurch gekennzeichnet, dass** die Wicklungen der Induktionsspule (30,50) derart angeordnet sind, dass im wesentlichen auf der gesamten Ausdehnung der Bratplatte (7,17,27,37) ein im wesentlichen homogenes Magnetfeld erzeugbar ist.

6. Bratgerät nach einem der Ansprüche 2 bis 5, **dadurch gekennzeichnet, dass** mindestens eine Messspule zwischen Bratplatte (7,17,27,37) und Induktionsspule (30,50) angeordnet ist.

7. Bratgerät nach Anspruch 6, **dadurch gekennzeichnet, dass** die mindestens eine Messspule derart angeordnet ist, dass sie im wesentlichen denselben Bereich der Bratplatte (7,17,27,37) abdeckt wie die Induktionsspule (30,50).

8. Bratgerät nach einem der Ansprüche 6 oder 7, **gekennzeichnet durch** zwei eine Messspuleneinheit (19a,19b,29) bildende Messspulen, die nebeneinander gegensinnig im Induktionsfeld der Induktionspulen (30,50) angeordnet sind.

9. Bratgerät nach einem der Ansprüche 6 bis 7, **gekennzeichnet durch** eine Kompensationsschaltung, die Störeinflüsse die bei Temperaturänderungen auftretenden Änderungen des elektrischen Widerstands der Induktionsspule (30,50) und der mindestens einen Messspule auf das Messergebnis der Messspule bzw. Messspuleneinheit (19a,19b,29) ausgleicht.

10. Bratgerät gemäss einem der Ansprüche 2 bis 9, **dadurch gekennzeichnet, dass** die Induktionsspule (30,50) auch eine Messspule ist, und dass eine Temperaturmessung bei abgeschalteter Induktionsleistung stattfindet.

11. Bratgerät nach einem der vorangehenden Ansprüche, **gekennzeichnet durch** eine Regel- und Steuereinheit, die die Temperatur der Bratplatte (7,17,27,37) in umso grösseren Zeitabständen misst, je kleiner eine Temperaturdifferenz zwischen zwei aufeinander folgenden Temperaturmessungen ist.

12. Bratgerät nach Anspruch 11, **dadurch gekennzeichnet, dass** jeder Induktionsspule (30,50) genau eine Regel- und Steuereinheit zugeordnet ist.

13. Bratgerät nach einem der vorangehenden Ansprüche, **gekennzeichnet durch** eine Kalibriervorrichtung, mit welcher Messpegel verschiedener Temperaturen der Bratplatte (7,17,27,37) ermittelbar und speicherbar sind.

14. Bratgerät nach einem der vorangehenden Ansprüche, **dadurch gekennzeichnet, dass** die Bratplatte mehrere Bereiche (18a,18b) aufweist, die individuell beheizbar und deren Temperatur individuell bestimmbar und einstellbar sind.

15. Bratgerät nach Anspruch 14, **dadurch gekennzeichnet, dass** in der Bratplatte (7,17,27,37) Mittel vorhanden sind, die einen Temperaturübertrag zwischen den einzelnen Bereichen (18a,18b) verhindern.

16. Bratgerät nach Anspruch 15, **dadurch gekennzeichnet, dass** die Bratplatte (7,17,27,37) eine Mehrschichtenplatte ist, die eine Schicht aus Aluminium zwischen zwei Schichten aus Edelstahl beinhaltet und dass ein Keil in der Aluminiumschicht eingebracht ist.

17. Bratgerät nach einem der vorangehenden Ansprüche, **gekennzeichnet durch** eine wärme- und korrosionsbeständige Bratplattenoberfläche, welche in erhitztem Zustand und bei Bratplattentemperaturen im Anwendungsbereich, tiefe Abstrahlungstemperaturen aufweisen, derart, dass bei einer Bratplattentemperatur von 200°C nahe der Bratplattenoberfläche Temperaturen von kleiner als 70°C gemessen werden.

18. Bratgerät nach Anspruch 17, **dadurch gekennzeichnet, dass** die Bratplatte im Bereich der Bratplattenoberfläche mindestens zwei aufeinanderfolgende dünne Schichten aufweist, wobei die mindestens zwei dünnen Schichten insgesamt 10-15% Phosphor beinhaltet.

19. Bratgerät nach Anspruch 18, **dadurch gekennzeichnet, dass** die mindestens zwei dünnen Schichten einen Phosphoranteil von 12-15% und einen Chromanteil von 15-30% Chrom aufweisen.

## Claims

1. A thermostatically regulated roasting/grilling device with a roasting/grilling plate (7,17,27,37) incorporated in the roasting/grilling device, **characterised in that** it contains at least one measurement coil forming an element of a high-frequency oscillation circuit, and that with the at least one measurement coil the temperature of the roasting/grilling plate (7,17,27,37) may be monitored in a contactless manner by way of electromagnetic radiation and the temperature may be used for the thermostatic regulation of the roasting/grilling power.

2. A roasting/grilling device according to claim 1, **characterised in that** the roasting/grilling plate (7,17,27,37) contains a ferromagnetic material and that at least one induction coil (30, 50) is present for heating the roasting/grilling plate.

3. A roasting/grilling device according to claim 2, **characterised in that** the induction coil (30, 50) is designed with a rectangular shape and the size of this induction coil (30, 50) corresponds essentially to the extension of the roasting/grilling plate (7,17,27,37).

4. A roasting/grilling device according to claim 3, **characterised in that** the distances d1 between two winding sections on longitudinal sides (50a) of the rectangular toil and distances d2 between two winding sections on width sides (50b) of the rectangular coil are different and vary as a function of the winding diameter.

5. A roasting/grilling device according to one of the claims 2 to 4, **characterised in that t**he windings of the induction coil (30, 50) are arranged in a manner such that an essentially homogeneous magnetic field may be produced essentially on the complete extension of the roasting/grilling plate (7,17,27,37).

6. A roasting/grilling device according to one of the claims 2 to 5, **characterised in that** at least one measurement coil is arranged between the roasting/grilling plate (7,17,27,37) and the induction coil (30, 50).

7. A roasting/grilling device according to claim 6. **characterised in that** the at least one measurement coil is arranged in a manner such that it covers essentially the same region of the roasting/grilling plate (7,17,27,37) as the induction coil (30, 50).

8. A roasting/grilling device according to one of the claims 6 or 7, **characterised by** two measurement coils forming a measurement coil unit (19a, 19b, 29), which measurement coils are arranged next to one another in an opposing manner in the induction field of the induction coils (30, 50).

9. A roasting/grilling device according to one of the claims 6 to 7, **characterised by** a compensation circuit, which compensates disturbing influences of changes of the electrical resistance of the induction coil (30, 50) and of the at least one measurement coil occurring with changes of temperature, on the measurement result of the measurement coil or measurement coil unit (19a, 19b, 29).

10. A roasting/grilling device according to one of the claims 2 to 9, **characterised in that** the induction coil (30, 50) is also a measurement coil, and that a temperature measurement takes place when the induction power is switched off.

11. A roasting/grilling device according to one of the preceding claims, **characterised by** a regulation and control unit which measures the temperature of the roasting/grilling plate (7, 17, 27, 37) in time intervals which are larger, the smaller is a temperature difference between two successive temperature measurements.

12. A roasting/grilling device according to claim 11, **characterised in that** exactly one regulation and control unit is allocated to each induction coil (30, 50).

13. A roasting/grilling device according to one of the preceding claims, **characterised by** a calibration device with which measurement levels of various temperatures of the roasting/grilling plate (7, 17, 27, 37) may be determined and stored.

14. A roasting/grilling device according to one of the preceding claims, **characterised in that** the roasting/grilling plate comprises several regions (18a, 18b) which may be individually heated and whose temperature may be determined and set in an individual manner.

15. A roasting/grilling device according to claim 14, **characterised in that** in the roasting/grilling plate (7,17,27,37) there are provided means which prevent a temperature transfer between the individual regions (18a, 18b).

16. A roasting/grilling device according to claim 15, **characterised in that** the roasting/grilling plate (7,17,27,37) is a multi-layer plate which contains a layer of aluminium between two layers of stainless steel and that a wedge is incorporated in the aluminium layer.

17. A roasting/grilling device according to one of the preceding claims, **characterised by** a heat-resistant and corrosion-resistant roasting/grilling plate surface which in the heated condition and with roasting/grilling plate temperatures in the application range has low radiation temperatures in a manner such that with a roasting/grilling plate temperature of 200°C, temperatures of smaller than 70°C are measured close to the roasting/grilling surface.

18. A roasting/grilling device according to claim 17, **characterised in that** the roasting/grilling plate in the region of the roasting/grilling plate surface comprises at least two successive thin layers, wherein the at least two thin layers in total contain 10-15% phosphor.

19. A roasting/grilling device according to claim 18, **characterised in that** the at least two thin layers have a phosphor constituent of 12-15% and a chromium constituent of 15-30%.

## Revendications

1. Appareil de cuisson à régulation thermostatique, qui présente une plaque de cuisson (7, 17, 27, 37) incorporée dans l'appareil de cuisson,
**caractérisé en ce que**
il contient au moins une bobine de mesure qui forme un élément d'un circuit oscillant à haute fréquence et
**en ce que** la température de la plaque de cuisson (7, 17, 27, 37) peut être interrogée sans contact par un rayonnement électromagnétique à l'aide de la ou des bobines de mesure et
**en ce que** la température peut être utilisée pour la régulation thermostatique de la puissance de cuisson.

2. Appareil de cuisson selon la revendication 1, **caractérisé en ce que** la plaque de cuisson (7, 17, 27, 37) contient un matériau ferromagnétique et **en ce qu'**il présente au moins une bobine d'induction (30, 50) qui chauffe la plaque de cuisson.

3. Appareil de cuisson selon la revendication 2, **caractérisé en ce que** la bobine d'induction (30, 50) a une forme rectangulaire et **en ce que** la taille de cette bobine d'induction (30, 50) correspond essentiellement à la taille de la plaque de cuisson (7, 17, 27, 37).

4. Appareil de cuisson selon la revendication 3, **caractérisé en ce que** la distance d1 entre deux parties d'enroulement situées sur les côtés longitudinaux (50a) de la bobine rectangulaire et la distance d2 entre deux parties d'enroulement situées sur les côtés transversaux (50b) de la bobine rectangulaire sont différentes et varient en fonction du diamètre des enroulements.

5. Appareil de cuisson selon l'une des revendications 2 à 4, **caractérisé en ce que** les enroulements de la bobine d'induction (30, 50) sont disposés de manière à pourvoir former un champ magnétique essentiellement homogène sur toute l'étendue de la plaque de cuisson (7, 17, 27, 37).

6. Appareil de cuisson selon l'une des revendications 2 à 5, **caractérisé en ce qu'**au moins une bobine de mesure est disposée entre la plaque de cuisson (7, 17, 27, 37) et la bobine d'induction (30, 50).

7. Appareil de cuisson selon la revendication 6, **caractérisé en ce que** la ou les bobines de mesure sont disposées de manière à recouvrir essentiellement la même partie de la plaque de cuisson (7, 17, 27, 37) que celle occupée par la bobine d'induction (30, 50).

8. Appareil de cuisson selon l'une des revendications 6 ou 7, **caractérisé par** deux bobines de mesure qui forment une unité (19a, 19b, 29) de bobine de mesure, disposées l'une à côté de l'autre et dans les sens opposés dans le champ d'induction des bobines d'induction (30, 50).

9. Appareil de cuisson selon l'une des revendications 6 à 7, **caractérisé par** un circuit de compensation qui compense les perturbations du résultat de mesure par la bobine de mesure ou par l'unité (19a, 19b, 29) de bobines de mesure, lesquelles perturbations surviennent lors de variations de la résistance électrique de la bobine d'induction (30, 50) et de la ou des bobines de mesure à cause de changes de température.

10. Appareil de cuisson selon l'une des revendications 2 à 9, **caractérisé en ce que** la bobine d'induction (30, 50) est également une bobine de mesure et **en ce que** la mesure de température a lieu lorsque la puissance d'induction est débranchée.

11. Appareil de cuisson selon l'une des revendications précédentes, **caractérisé par** une unité de régulation et de commande qui mesure la température de la plaque de cuisson (7, 17, 27, 37) à des intervalles de temps d'autant plus grands que la différence de température entre deux mesures de température successives est plus petite.

12. Appareil de cuisson selon la revendication 11, **caractérisé en ce que** chaque bobine d'induction (30, 50) est associée à une unité de régulation et de commande respective.

13. Appareil de cuisson selon l'une des revendications précédentes, **caractérisé par** un dispositif d'étalonnage qui permet de déterminer et de conserver en mémoire les niveaux de mesure de différentes températures de la plaque de cuisson (7, 17, 27, 37).

14. Appareil de cuisson selon l'une des revendications précédentes, **caractérisé en ce que** la plaque de cuisson présente plusieurs zones (18a, 18b) qui peuvent être chauffées séparément et dont la température peut être déterminée et réglée séparément.

15. Appareil de cuisson selon la revendication 14, **caractérisé en ce que** la plaque de cuisson (7, 17, 27, 37) présente des moyens qui empêchent un transfert de température entre les différentes zones (18a, 18b).

16. Appareil de cuisson selon la revendication 15, **caractérisé en ce que** la plaque de cuisson (7, 17, 27, 37) est une plaque multicouches qui contient une couche d'aluminium comprise entre deux couches d'acier allié et **en ce qu'**un biseau est inséré dans la couche d'aluminium.

17. Appareil de cuisson selon l'une des revendications précédentes, **caractérisé en ce que** la surface de la plaque de cuisson résiste à la température et à la corrosion et **en ce que** sa température de rayonnement est basse lorsque la plaque de cuisson est chauffée à une température située dans la plage d'utilisation, de telle sorte que lorsque la température de la plaque de cuisson est de 200°C, on mesure à proximité de la surface de la plaque de cuisson une température inférieure à 70°C.

18. Appareil de cuisson selon la revendication 17, **caractérisé en ce que** dans la zone occupée par la surface de la plaque de cuisson, la plaque de cuisson présente au moins deux minces couches successives, les deux ou plusieurs couches minces contenant globalement de 10 à 15 % de phosphore.

19. Appareil de cuisson selon la revendication 18, **caractérisé en ce que** les deux ou plusieurs couches minces ont une teneur en phosphore de 12 à 15 % et une teneur en chrome de 15 à 30 %.
